Europäisches Patentamt

European Patent Office

Office européen des brevets

(19)

(11) Veröffentlichungsnummer: **0 179 446**
**B1**

# (12) EUROPÄISCHE PATENTSCHRIFT

(45) Veröffentlichungstag der Patentschrift: **16.05.90**

(21) Anmeldenummer: **85113397.5**

(22) Anmeldetag: **22.10.85**

(51) Int. Cl.⁵: **B 01 D 37/00**, B 01 D 39/08

(54) **Verfahren und Vorrichtung zur Bildung eines Filterkuchens.**

(30) Priorität: **24.10.84 DE 3438941**

(43) Veröffentlichungstag der Anmeldung:
**30.04.86 Patentblatt 86/18**

(45) Bekanntmachung des Hinweises auf die
Patenterteilung:
**16.05.90 Patentblatt 90/20**

(84) Benannte Vertragsstaaten:
**AT BE CH DE FR GB IT LI LU NL SE**

(56) Entgegenhaltungen:
**DE-A-2 738 239
DE-C- 878 795
US-A-2 332 917
US-A-3 288 288
US-A-3 677 411**

**CHEMIE INGENIEUR TECHNIK, Band 55, Nr. 11,
November 1983, Seiten 829-839, Nürnberg; D.
REDEKER et al.: "Das mechanische Entfeuchten
von Filterkuchen"**

(73) Patentinhaber: **Züricher Beuteltuchfabrik AG
CH-8803 Rüschlikon (CH)**

(72) Erfinder: **Stahl, Werner, Dr.
Stalbühlweg 8
D-6740 Landau (DE)**

(74) Vertreter: **Weber, Otto Ernst, Dipl.-Phys.
Weber & Heim Hofbrunnstrasse 36
D-8000 München 71 (DE)**

EP 0 179 446 B1

## Beschreibung

Die Erfindung betrifft ein Verfahren zur Bildung eines Filterkuchens auf einem Filtermittel, insbesondere auf einem Filtertuch, wie es im Oberbegriff des Anspruchs 1 beschrieben ist, sowie ein Filtertuch zur Durchführung des Verfahrens.

Ein gattungsgemäßes Verfahren ist aus der US—A 2,332,917 bekannt. Zur Durchführung des Verfahrens ist ein Raster in Form eines Stützgewebes unter dem Filtertuch anzuordnen, um bei einem zum Abwerfen des Filterkuchens angewandten Druckluft-Rückstoß das Ausbauchen des Filtertuchs auf eine geringe Amplitude zu begrenzen.

Es besteht grundsätzlich die Gefahr, daß der Filterkuchen während der Trocknungsphase aufreißt. Luft dringt im Kurzschluß durch die Risse und das Tuch, was dazu führt, daß das Vakuum zusammenbricht oder merklich abnimmt. Sobald Risse auftreten, bleibt der Filterkuchen naß, d.h. die weitere Trockensaugung des Filterkuchens hört sofort nach der Ausbildung der Risse auf. Dieser Effekt wird sich auch nachteilig aus, wenn solch ein Filterkuchen noch ausgewaschen wird. Die Waschflüssigkeit wird praktisch nur durch die Risse gesaugt, weil sie den Weg des geringsten Widerstandes geht. Es bleibt nichts weiter übrig, als das Produkt durch mehrmaliges Zwischenanmaischen auf die gewünschte Reinheit zu bringen.

In extremen Fällen bilden sich auf der Kuchenoberfläche Rißmuster. Dünne Filterkuchen neigen weniger zur Rißbildung als dicke Filterkuchen gleichen Materials. Dabei können die Risse den Filterkuchen völlig, also bis auf das Filtertuch, durchdringen.

Da die Risse aus vorstehend erläuterten Gründen beim Waschen und beim Trockensaugen stören, hat man bisher auf kontinuierlichen Filtern (Trommel-/Bandfilter) sich damit beholfen, diese durch Preßrollen oder Preßbänder zuzudrücken. Bei Horizontal-Filtration (Tellerfilter, Bandfilter) kann man durch nochmaliges Aufgeben von Suspension auf den bereits vorentfeuchteten und deshalb gerissenen Filterkuchen erreichen, daß die Risse nochmals durch einen einfiltrierenden Feststoff zugefiltert werden (Heilung der Risse), jedoch kann man mit Farbversuchen nachweisen, daß die Porosität dieses später einfiltrierten Materials höher ist als die des ursprünglichen Materials. Dadurch ergibt sich eine gewisse Inhomogenität des Kuchens mit den entsprechenden Nachteilen.

Bei Scheibenfiltern hat man diese Möglichkeit nicht. Die Risse können nicht unterdrückt werden.

Falls dies bei der Auslegung der Anlage bereits bekannt ist, kann man keine Scheibenfilter einsetzen, sondern muß auf Trommelfilter mit den erwähnten Preßwalzen oder -bändern übergehen, was zu höheren, etwa doppelten Kosten führt.

Eine andere Möglichkeit, die Risse zu unterdrücken, besteht darin, der zu filternden Suspension geringe Mengen an Feststoffen, z.B. Zellstoff oder Glasfaser, beizugeben, was jedoch aus Gründen der Reinheit des Stoffes bzw. der Kosten sehr selten möglich ist.

Ferner ist aus der DE-A-27 38 239 eine Filtervorrichtung zur Herstellung von Formkörpern, insbesondere Erzpellets aus Filterkuchen eines Feststoff-Flüssigkeitsfilters bekannt. Auf einem Filtertuch ist ein mit unterteilten Formmulden versehenes Gitter zur Ausbildung der Pellets und zu ihrem Weitertransport angeordnet.

Weiterhin ist aus der DE-C-87 87 95 ein Drehfilter mit einer Filtertrommel bekannt, die an ihrem äußeren Umfang parallel zur Achse Trennleisten zur Bildung von radial gerichteten Kammern aufweist. Die Kammern nehmen den Filterkuchen auf und bilden Filterkuchenelemente. Hierbei dienen die über den Umfang verteilten Kammern als Transportmittel.

Außerdem ist in der US-A-36 77 411 ein endloses Filterband beschrieben, das in Form eines Förderbandes über zwei achsparallele Trommeln geführt ist. Dieses Bandfilter wirkt in dem horizontalen Bereich mit einem Endlosrahmen zusammen, der mit gleicher Umfangsgeschwindigkeit und -richtung weiterbewegt wird und der ähnlich einer Leiter mit seitlichen Begrenzungen und sprossenartigen Querunterteilungen zur Bildung von Transportkammern versehen ist.

Der Erfindung liegt die Aufgabe zugrunde, ein gattungsgemäßes Verfahren sowie ein Filtertuch zur Durchführung des Verfahrens anzugeben, mit welcher Rißbildungen vermieden werden bzw. falls eine minimale Rißbildung zugestanden werden kann, diese hinsichtlich Größe und Ausrichtung zu steuern.

Verfahrensmäßig wird die Aufgabe alternativ gemäß dem kennzeichnenden Teil des Anspruchs 1 oder 2 gelöst. Hinsichtlich des Filtertuchs wird die Aufgabe alternativ gemäß dem kennzeichnenden Teil des Anspruchs 5 oder 8 gelöst.

Vorteilhafte Weiterbildungen sind jeweils in den abhängigen Ansprüchen beschrieben.

Besonders bevorzugte Ausführungsformen des erfindungsgemäßen Verfahrens sehen vor, daß die Filterkuchenelemente rund, oval, mehreckig, insbesondere sechseckig (wabenförmig) oder reifenprofilartig ausgebildet werden. Entsprechende Filtertücher lassen sich relativ einfach herstellen und es kann die Größe der einzelnen Filterkuchenelemente bei diesen Ausführungsformen des erfindungsgemäßen Verfahrens den jeweiligen Erfordernissen leicht angepaßt werden.

Eine weitere bevorzugte Ausführungsform des erfindungsgemäßen Verfahrens sieht vor, daß die für das Filtrat undurchlässigen Zonen auf dem Filtermedium dadurch gebildet werden, daß durch Druck verfestigte Zonen im Filterkuchen gebildet werden. Bei dieser bevorzugten Ausführungsform des Erfindungsgegenstandes kann ein ganz normales Filtertuch verwendet werden.

Weiterhin kann vorzugsweise vorgesehen sein, daß die undurchlässigen Zonen durch eine auf das Filtertuch aufgebrachte oder in das Filtertuch eingebrachte wasserundurchlässige Substanz, wie beispielsweise Silikon, Kautschuk oder dergleichen hergestellt sind. Auf diese Weise läßt sich ein Filtertuch für die erfindungsgemäße Vorrichtung relativ einfach und preiswert herstellen.

Für viele praktische Anwendungsfälle kann die Anordnung derart gewählt werden, daß die undurchlässigen Zonen einen Abstand zueinander aufweisen, der etwa der zweifachen Höhe der angestrebten Filterkuchen-Höhe entspricht. Auf diese Weise kann zwar die Rißbildung vermieden werden, ohne jedoch eine erhebliche Filterfläche zu verlieren.

Bei einigen Materialien für ein Filtertuch kann es auch zweckmäßig und einfach sein, daß in den undurchlässigen Zonen Fasern eines Filtertuches miteinander verschmolzen sind.

Ein Filtertuch gemäß der Erfindung kann bei bestimmten Materialien des Filtermediums technologisch auch vorteilhaft dadurch hergestellt werden, daß in den undurchlässigen Zonen eine für Filträt undurchlässige Folie auf das Filtertuch aufgebracht ist.

Schließlich kann vorzugsweise auch vorgesehen sein, daß auf das Filtertuch ein für Filtrat undurchlässiges Flachmaterial aufgebracht ist, welches in den begrenzten geometrischen Bereichen der Filtertuch-Elemente Bohrungen für den Durchtritt des Filtrates aufweist. Eine derartige Anordnung kann insbesondere dann vorteilhaft sein, wenn sehr dünne Filtertücher verwendet werden, die keine oder nur eine geringe Querfiltration innerhalb des Filtertuches selbst zulassen.

Statt der wabenähnlichen perforierten Unterlegbleche kann man denselben Effekt durch Unterlagsgewebe erreichen. Dieses ist nur an den innerhalb des Sechsecks liegenden Flächen perforiert. Auf diese Weise wird die Funktion des Abdichtens aus dem Tuch heraus in die Unterlage — Unterlagsgewebe — hineingelegt.

Es zeigen:

Fig. 1 schematisch in Aufsicht ein rundes, anfiltriertes Filterkuchenelement mit angedeuteter filtrierender Fläche,

Fig. 2 eine ähnliche Anordnung wie in Fig. 1, wobei die filtrierende Fläche Sechseckform aufweist,

Fig. 3 schematisch und in Aufsicht eine wabenähnliche, perforierte Unterlage, wobei die Ränder unperforiert bleiben, verwendbar insbesondere für sehr dünne Filtertücher,

Fig. 4 eine Prinzipskizze im Schnitt, darstellend Filterkuchenelemente auf einem Filtertuch mit zwischen den Filterkuchenelementen angeordneten Gewebeteilen aus unfiltrierbarem Material, dessen Dicke jedoch kleiner als die der Filterkuchenelemente ist,

Fig. 5 schematisch im Schnitt einen Filterkuchen mit im Abstand eingedrückten Oberflächen, so daß druckverfestigte Zonen entstehen und den Filterkuchen in Filterkuchenelemente unterteilen, und

Fig. 6 und 7 schematisch in Aufsicht Filterkuchen, die in Filterkuchenelemente unterteilt sind durch reifenprofilähnliche Formen, so daß mögliche Rißstellen gebildet sind (gesteuerte Rißstellen).

Mit D ist der Durchmesser eines anfiltrierten Filterkuchenelementes 17 bezeichnet, das hier Kreisform aufweist. Der Durchmesser d der filtrierenden Fläche liegt vorzugsweise zentrisch zur Peripherie des Filterkuchenelementes; die dadurch gebildete unfiltrierbare Ringzone sollte möglichst klein gehalten werden.

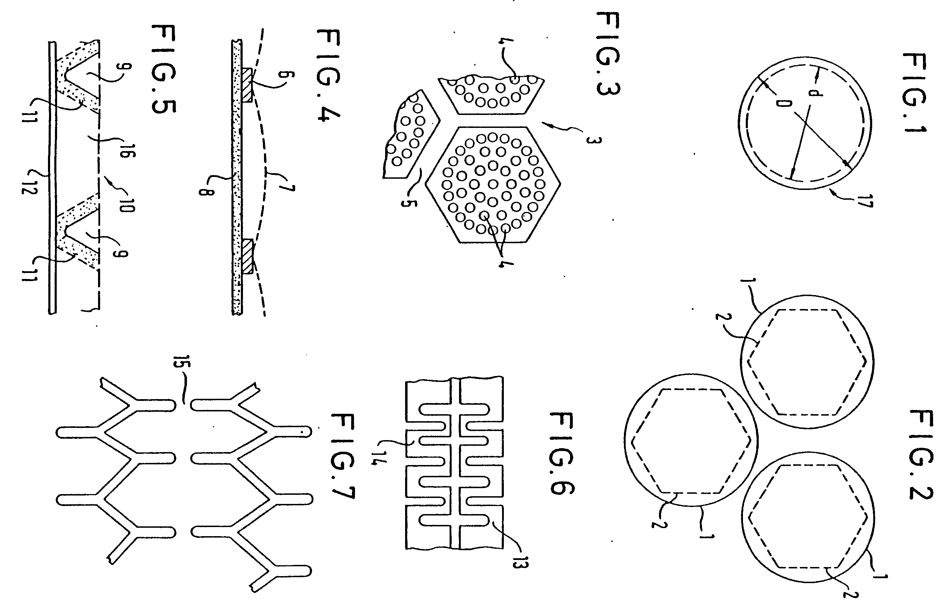

Die Filterkuchenelemente nach Fig. 2 sind günstiger, weil die sechseckige Umrandung der filtrierenden Fläche 2 eine günstigere Anordnung mit einem geringeren Verlust an Filterflächen bietet. Der Umriß 1 des gebildeten Filterkuchenelementes ist hier ebenfalls kreisrund. Meist werden die Filterkuchenelemente nicht symmetrisch zueinander liegen.

Wenn man sehr dünne Filtertücher verwendet, die keine oder nur eine geringe Querfiltration innerhalb der Filtertuchdicke zulassen, genügt es, das dünne Filtertuch auf z.B. einer wabenähnlichen Unterlage zu stützen, so daß dort kein Filterkuchen anfiltriert werden kann. Dazu kann man Unterlegbleche 3 (s. Fig. 3) mit gleich großen oder unterschiedlich großen Bohrungen 4 verwenden, die nur innerhalb des sechseckigen Fensters vorgesehen sind; die Ränder bleiben unperforiert, so daß nicht filtrierende Zonen 5 entstehen, wodurch die erfindungsgemäßen Filterkuchenelemente gebildet werden.

Das Gewebe 6 aus nicht filtrierendem Material in Fig. 4 weist eine nennenswerte Dicke auf, die aber geringer als die Filterkuchendicke ist. Durch dieses Gewebe 6 sind die erfindungsgemäßen Filterkuchenelemente 7 auf einem Filtertuch 8 gebildet.

Eine weitere erfinderische Idee ist in Fig. 5 wiedergegeben. Man kann z.B. eine Wabenkonstruktion in den Filterkuchen einpressen, d.h. man kann das Filtertuch 12 belassen und den Filterkuchen auf seiner gesamten Fläche anfiltrieren und durch z.B. eine Walze Wabenprofile andrücken. Durch die eingedrückte erfinderische Oberfläche 9 verfestigt sich das anlagernde Material, so daß druckverfestigte Zonen 11 gebildet werden; zwischen diesen druckverfestigten Zonen 11 ergeben sich die erfindungsgemäßen Filterkuchenelemente 16.

Die Filterkuchenelemente können wenigstens eine solche geometrische Form aufweisen, daß einerseits die Filterfläche, d.h. die filtrierende Fläche relativ groß und der Verlust durch den Rand möglichst klein ist, andererseits jedoch der Rand so groß ist, daß die Kuchen nicht "überziehen".

In Weiterentwicklung der Erfindung könnte man unter Umständen auch eine geringe Rißbildung zulassen. Diese sollte steuerbar sein, und zwar durch entsprechende Profilgebung. Solche Profilgebungen sind in den Figuren 6 und 7 zu erkennen, wobei diese gleichmäßig (also symmetrisch) oder auch ungleichmäßig gewählt werden können. Diese Profile erinnern an Reifenprofile. Durch entsprechende Ausgestaltung können gleich große oder unterschiedlich große Rißbildungszonen 13, 14, 15 gebildet werden.

Rißbildungen sind also an solchen Stellen erlaubt, an denen das Tuch darunter unfiltrierbar ist. Mit anderen Worten ist die Rißbildung dort erlaubt, wo sowieso keine Luft durch das Tuch geführt werden kann.

**Patentansprüche**

1. Verfahren zur Bildung eines Filterkuchens auf einem Filtermittel, insbesondere auf einem Filtertuch (8), bei welchem mit Hilfe von beiderseits des Filtermittels unterschiedlichen Gasdrücken beim Hindurchtreten eines Filtrats durch das Filtermittel Feststoffteilchen aus einer Suspension abgetrennt und auf dem Filtermittel abgelagert werden, und bei welchem der mit Filtrat angereicherte Filterkuchen mit Hilfe von durch den Filterkuchen hindurchgeführtem Gas zumindest teilweise getrocknet wird, dadurch gekennzeichnet,

a) daß auf dem Filtermittel für das Filtrat undurchlässige Zonen (5) gebildet werden, die begrenzte geometrische Bereiche auf dem Filtermittel umschließen,

b) daß in jedem begrenzten geometrischen Bereich ein Filterkuchen-Element (7, 17) gebildet wird, welches von benachbarten Filterkuchen-Elementen (7, 17) getrennt gehalten wird, und

c) daß die Größe jedes begrenzten geometrischen Bereiches derart gering vorgegeben wird, daß unter Berücksichtigung der jeweiligen Produkt-Eigenschaften des Filterkuchens innerhalb eines einzelnen Filterkuchen-Elementes (7, 17) während einer beim Trocknen des Filterkuchens auftretenden Filterkuchen-Schrumpfung keine Rißbildung eintritt.

2. Verfahren zur Bildung eines Filterkuchens auf einem Filtermittel, insbesondere auf einem Filtertuch (8), bei welchem mit Hilfe von beiderseits des Filtermittels unterschiedlichen Gasdrücken beim Hindurchtreten eines Filtrats durch das Filtermittel Feststoffteilchen aus einer Suspension abgetrennt und auf dem Filtermittel abgelagert werden, und bei welchem der mit Filtrat angereicherte Filterkuchen mit Hilfe von durch den Filterkuchen hindurchgeführtem Gas zumindest teilweise getrocknet wird, dadurch gekennzeichnet,

a) daß auf dem Filtermittel für das Filtrat undurchlässige Zonen (5) gebildet werden, die begrenzte geometrische Bereiche auf dem Filtermittel umschließen,

b) daß die für das Filtrat undurchlässigen Zonen (5) auf dem Filtermedium dadurch gebildet werden, daß durch Druck verfestigte Zonen (11) im Filterkuchen gebildet werden, so daß einzelne Filterkuchen-Elemente (16) entstehen, und

c) daß die Größe jedes begrenzten geometrischen Bereiches derart gering vorgegeben wird, daß unter Berücksichtigung der jeweiligen Produkt-Eigenschaften des Filterkuchens innerhalb eines einzelnen Filterkuchen-Elementes (16) während einer beim Trocknen des Filterkuchens auftretenden Filterkuchen-Schrumpfung keine Rißbildung eintritt.

3. Verfahren nach Anspruch 2, dadurch gekennzeichnet, daß die für das Filtrat undurchlässigen Zonen (5) auf dem Filtermittel dadurch gebildet werden, daß vorgefertigte Elemente zumindest teilweise in den Filterkuchen eingepreßt werden.

4. Verfahren nach einem der Ansprüche 1 bis 3, dadurch gekennzeichnet, daß die Filterkuchen-Elemente (7, 16, 17) rund, oval, mehreckig, insbesondere sechseckig (wabenförmig) oder reifenprofilartig ausgebildet werden.

5. Filtertuch zur Durchführung des Verfahrens nach einem der vorhergehenden Ansprüche, dadurch gekennzeichnet,

a) daß im Filtertuch (8) für das Filtrat undurchlässige Zonen ausgebildet sind, die begrenzte geometrische Bereiche auf dem Filtertuch (8) umschließen;

b) daß in den begrenzten geometrischen Bereichen gebildete Filtertuch-Elemente von benachbarten Filtertuch-Elementen getrennt angeordnet sind, und

c) daß die Größe der Filtertuch-Elemente derart gering ist, daß unter Berücksichtigung der jeweiligen Produkt-Eigenschaften des Filterkuchens innerhalb eines einzelnen Filtertuch-Elementes während einer beim Trocknen des Filterkuchens auftretenden Filterkuchen-Schrumpfung keine Rißbildung eintritt.

6. Filtertuch nach Anspruch 5, dadurch gekennzeichnet, daß die undurchlässigen Zonen (5) eine in das Filtertuch (8) eingebrachte für das Filtrat undurchlässige Substanz, wie beispielsweise Silikon, Kautschuk oder dergleichen enthalten.

7. Filtertuch nach einem der Ansprüche 5 oder 6, dadurch gekennzeichnet, daß in den undurchlässigen Zonen (5) Fasern des Filtertuchs (8) miteinander verschmolzen sind.

8. Filtertuch zur Durchführung des Verfahrens nach einem der Ansprüche 1 bis 4, dadurch gekennzeichnet,

a) daß die undurchlässigen Zonen (5) einer auf der Filtertuch-Oberfläche aufgebrachten, für das Filtrat undurchlässigen Schicht aus Silikon, Kautschuk oder dergleichen, oder einer Folie oder einem Flachmaterial bestehen,

b) daß in den begrenzten geometrischen Bereichen gebildete Filtertuchelemente von benachbarten Filtertuchelementen getrennt angeordnet sind, und

c) daß die Größe der Filtertuchelemente derart gering ist, daß unter Berücksichtigung der jeweiligen Produkteigenschaften des Filterkuchens innerhalb eines einzigen Filtertuchelementes während einer beim Trocknen des Filterkuchens auftretenden Filterkuchenschrumpfung keine Rißbildung eintritt.

9. Filtertuch nach Anspruch 8, dadurch gekennzeichnet, daß das Flachmaterial in den begrenzten geometrischen Bereichen der Filtertuchelemente Bohrungen für den Durchtritt des Filtrats aufweist.

10. Filtertuch nach einem der Ansprüche 5 bis 9, dadurch gekennzeichnet, daß die undurchlässigen Zonen (5) einen Abstand zueinander aufweisen, der etwa der zweifachen Höhe der angestrebten Filterkuchen-Höhe entspricht.

## Revendications

1. Procédé pour la formation d'un gâteau de filtre sur un moyen de filtrage, en particulier sur une toile filtrante (8), avec lequel à l'aide de pressions gazeuses différentes de chaque côté du moyen de filtrage, on peut séparer en faisant passer un filtrat à travers le moyen de filtrage, des particules solides d'une suspension et les déposer sur le moyen de filtrage, et avec lequel le gâteau de filtrage enrichi par le filtrat est au moins partiellement séché en faisant passer du gaz à travers lui, caractérisé en ce que:

a) sur le moyen de filtrage sont formées des zones (5) non perméables pour le filtrat, zones qui entourent sur le moyen de filtrage des domaines géométriques délimités,

b) dans chaque domaine géométrique délimité se forme un élément de gâteau de filtre (7, 17), qui est maintenu séparé des éléments voisins de gâteau de filtre (7, 17),

c) la grandeur de chaque domaine géométrique délimité est maintenue petite; de façon que, en tant compte des propriétés respectives du produit du gâteau de filtre à l'intérieur d'un élément particulier (7, 17) du gâteau de filtre, il ne se forme pas de fissure au cours du retrait du gâteau de filtre accompagnant son séchage.

2. Procédé pour la formation d'un gâteau de filtre sur un moyen de filtrage (8), en particulier sur une toile filtrante (8), avec lequel à l'aide de pressions gazeuses différentes de chaque côté du moyen de filtrage, on peut séparer, en faisant passer un filtrat à travers le moyen de filtrage, des particules solides d'une suspension et les déposer sur le moyen de filtrage, et avec lequel le gâteau de filtrage enrichi par le filtrat est au moins partiellement séché en faisant passer du gaz à travers lui, caractérisé en ce que:

a) sur le moyen de filtrage sont formées des zones (5) non perméables pour le filtrat, zones qui entourent sur le moyen de filtrage des domaines géométriques délimités,

b) les zones imperméables au filtrat sont formées sur le moyen de filtrage par le fait que par suite de la pression, des zones (11) durcies se forment dans le gâteau de filtrage, de sorte que se créent des éléments de gâteau de filtre séparés (16), et

c) la grandeur de chaque domaine géométrique délimité et prédéfinie étroite, de façon que, en tenant compte des propriétés respectives du produit du gâteau de filtre à l'intérieur d'un élément particulier (7, 17) du gâteau de filtre, il ne se forme pas de fissure au cours du retrait du gâteau de filtre accompagnant son séchage.

3. Procédé selon la revendication 2, caractérisé en ce que les zones (5) imperméables au filtrat situées sur le moyen de filtrage sont créées par le fait, que des éléments préfabriqués sont enfoncés au moins partiellement dans le gâteau de filtre.

4. Procédé selon l'une quelconque des revendications 1 à 3, caractérisé en ce que les éléments (7, 16, 17) du gâteau de filtre sont réalisés ronds, ovales, polygonaux, en particulier hexagonaux (alvéolaires) ou à la façon d'un profil de pneus.

5. Toile de filtrage pour réalisation du procédé selon l'une quelconque des réalisations précédentes, caractérisée en ce que:

a) sur la toile de filtrage (8) sont réalisées des zones imperméables pour le filtrat, qui entourent sur la toile de filtrage (8) les domaines géométriques délimitées;

b) des éléments de toile de filtrage formés en domaines géométriques délimités sont disposés séparés des éléments de toile de filtrage voisins;

c) la grandeur des éléments de toile de filtrage est petite, de façon que, en tenant compte des propriétés respectives du produit du gâteau de filtre se trouvant à l'intérieur d'un élément particulier de toile de filtre, il ne se forme pas de fissure au cours du retrait accompagnant le séchage du gâteau de filtre.

6. Toile de filtrage selon la revendication 5, caractérisée en ce que les zones (5) imperméables contiennent une substance imperméable pour le filtrat introduite dans la toile de filtrage (8), comme par exemple silicone, caoutchouc ou similaires.

7. Toile de filtrage selon l'une ou l'autre des revendications 5 ou 6, caractérisée en ce que, dans les zones (5) imperméables, des fibres de la toile de filtrage (8) sont réunies par fusion, les unes aux autres.

8. Toile de filtrage pour la réalisation du procédé selon l'une quelconque des revendications 1 à 4, caractérisée en ce que:

a) les zones (5) imperméables comprennent une couche imperméable au filtrat, rapportée sur la surface de la toile de filtre, en silicone, caoutchouc ou similaires, ou une feuille ou un matériau plat,

b) dans les domaines géométriques délimités sont placés des éléments de toile de filtrage séparés des éléments de toile de filtrage voisins,

c) la grandeur des éléments de toile de filtrage est petite, de façon que, en tenant compte des propriétés respectives du produits du gâteau de filtre à l'intérieur d'un élément particulier de toile de filtrage, il ne se forme pas de fissure au cours du retrait accompagnant le séchage du gâteau de filtre.

9. Toile de filtre selon la revendication 8, caractérisée en ce que le matériau plat dans les domaines géométriques délimités des éléments de toile de filtre, comprend des trous pour le passage du filtrat.

10. Toile de filtrage selon l'une quelconque des revendications 5 à 9, caractérisée en ce que les zones (5) imperméables sont à une distance les unes des autres qui correspond à peu près au double de la hauteur recherchée pour le gâteau de filtre.

## Claims

1. Process for forming a filter cake on a filter material, particularly on a filter cloth (8), in which with the aid of different gas pressures on either side of the filter material when a filtrate passes through the latter solid particles are separated from a suspension and deposited on the filter material and in which the filter cake enriched with the filtrate is at least partly dried with the aid of gas passed through the filter cake, characterized in that

a) filtrate-impermeable zones (5) are formed on the filter material and surround on the latter limited geometrical areas,

b) in each limited, geometrical area is formed a filter cake element (7, 17), which is kept separate from adjacent filter cake elements (7, 17) and

c) the size of each limited, geometrical area is made so small that, whilst taking account of the product characteristics of the filter cake within a single filter cake element (7, 17) no cracking occurs during filter cake shrinkage taking place during the drying of the filter cake.

2. Process for forming a filter cake on a filter material, particularly on a filter cloth (8), in which with the aid of different gas pressures on either side of the filter material when a filtrate passes through the latter solid particles are separated from a suspension and deposited on the filter material and in which the filter cake enriched with the filtrate is at least partly dried with the aid of gas passed through the filter cake, characterized in that

a) filtrate-impermeable zones (5) are formed on the filter material and surround on the latter limited geometrical areas,

b) the filtrate-impermeable zones (5) on the filter material are formed in that pressure-solidified zones (11) are formed in the filter cake, which leads to individual filter cake elements (16) and

c) the size of each limited, geometrical area is made so small that, taking account of the product characteristics of the filter cake, within an individual filter cake element (16) no cracking occurs during the filter cake shrinkage taking place when drying the filter cake.

3. Process according to claim 2, characterized in that the filtrate-impermeable zones (5) on the filter material are formed in that prefabricated elements are at least partly pressed into the filter cake.

4. Process according to one of the claims 1 to 3, characterized in that the filter cake elements (7, 16, 17) are made circular, oval, polygonal, particularly hexagonal (honeycomb-shaped) or tyre tread-like.

5. Filter cloth for performing the process according to one of the preceding claims characterized in that

a) zones impermeable for the filtrate are formed in the filter cloth (8) and surround on the latter the limited, geometrical areas,

b) the filter cloth elements formed in the limited, geometrical areas are kept separate from adjacent filter cloth elements and

c) the size of the filter cloth elements is so small that, taking account of the product characteristics of the filter cake, no cracking occurs within an individual filter cloth element during the filter cake shrinkage taking place on drying the filter cake.

6. Filter cloth according to claim 5, characterized in that the impermeable zones (5) contain a substance, such as e.g. silicone, rubber or the like impermeable for the filtrate and introduced into the filter cloth (8).

7. Filter cloth according to one of the claims 5 or 6, characterized in that fibres of the filter cloth (8) are fused together in the impermeable zones (5).

8. Filter cloth for performing the process according to one of the claims 1 to 4, characterized in that

a) the impermeable zones (5) of a filtrate-impermeable layer applied to the filter cloth surface are made from silicone, rubber or the like, or a foil or a flat material,

b) filter cloth elements formed in the limited, geometrical areas are kept separate from adjacent filter cloth elements and

c) the size of the filter cloth elements is so small that, taking account of the product characteristics of the filter cake, no cracking occurs within a single filter cloth element during filter cake shrinkage taking place during the drying of the filter cake.

9. Filter cloth according to claim 8, characterized in that the flat material in the limited, geometrical areas of the filter cloth elements has bores for the passage of the filtrate.

10. Filter cloth according to one of the claims 5 to 9, characterized in that the impermeable zones (5) have a reciprocal spacing corresponding to roughly twice the sought filter cake height.

FIG.1

FIG.2

FIG.3

FIG.6

FIG.4

FIG.7

FIG.5